# EUROPÄISCHE PATENTSCHRIFT

(11) **EP 3 020 271 B1**
(45) Veröffentlichungstag und Bekanntmachung des Hinweises auf die Patenterteilung: **03.05.2017**
(21) Anmeldenummer: 15193596.2
(22) Anmeldetag: 09.11.2015
(51) Int. Cl.: A01K 1/00, A01K 1/02

(54) **STALLANLAGE**
STALL ARRANGEMENT
INSTALLATION D'ETABLE

(30) Priorität: 11.11.2014 DE 102014116434
(43) Veröffentlichungstag der Anmeldung: 18.05.2016
(73) Patentinhaber: AGROTEL GmbH, 94152 Neuhaus am Inn (DE)
(72) Erfinder: Laner, Cyriak, 94152 Neuhaus/Inn (DE)
(74) Vertreter: Prinz & Partner mbB

(56) Entgegenhaltungen:
- WO-A1-2009/128704
- DE-A1-102012 012 034
- DE-U1- 20 216 251

## Beschreibung

Die Erfindung betrifft eine Stallanlage mit einem ersten Bereich und einem zweiten Bereich, in denen sich Tiere aufhalten können, wobei dem zweiten Bereich eine Box zugeordnet ist, die an mindestens einer Seite offen ist, so dass Tiere in die Box gelangen können.

Eine solche Stallanlage kann insbesondere zur Kälberaufzucht verwendet werden. Die Box bildet einen eng abgegrenzten Bereich, der gegenüber einem offenen, weitläufigen Stall eine Art Geborgenheitsgefühl erzeugt. Bei der Box kann es sich insbesondere um ein sogenanntes Großraumiglu handeln.

Die Stallanlage (auch bezeichnet als "Kälberdorf") weist verschiedene Klimazonen auf, die von den Tieren nach Bedarf aufgesucht werden können. Dies steigert das Wohlbefinden und die Gesundheit der Tiere.

Dank der modularen Bauweise sind flexible Lösungen und individuelle Erweiterungen realisierbar.

Während eine Box hinsichtlich der Aufzuchtbedingungen optimal ist, ergibt sich ein hoher Aufwand für die Reinigung. Die Boxen müssen einzeln ausgemistet, gereinigt und wieder eingestreut werden.

Aus der DE 10 2012 012 034 A1 ist ein Schweinestall mit einem verstellbaren Kastenstand bekannt, der dazu vorgesehen ist, bei Bedarf die durch den Kastenstand gebildeten Einzelabteile in eine freie Lauffläche umzuwandeln.

Die Aufgabe der Erfindung besteht darin, eine Stallanlage dahingehend zu verbessern, dass der Aufwand für das Reinigen der Box verringert ist.

Zur Lösung dieser Aufgabe ist bei einer Stallanlage der eingangs genannten Art vorgesehen, dass die Box eine eigenstabile Kiste mit Seitenwänden und Dach ist und dass die Box verstellbar montiert ist, so dass sie aus einer Normalposition, in der sie den zweiten Bereich abgrenzt, in eine Reinigungsposition gebracht werden kann, in der ein freier Zugang zum zweiten Bereich möglich ist. Die Erfindung beruht auf dem Grundgedanken, die Box mit geringem Aufwand "aus dem Weg zu schaffen", damit der zweite Bereich ohne Beeinträchtigung von Wänden, Decken etc. zugänglich ist. Hierdurch ergibt sich eine garantierte Arbeitseffizienz durch die Möglichkeit der Ein-Mann-Bewirtschaftung. Dadurch, dass die Box ein eigenstabiles Großraumiglu mit Seitenwänden und Dach ist, kann eine solche Box nach Art einer vorgefertigten Kiste oder Hütte mit geringem Aufwand aufgestellt werden. Wenn sie in die Reinigungsposition gebracht ist, kann dennoch der zweite Bereich problemlos gereinigt werden.

Gemäß einer bevorzugten Ausführungsform ist vorgesehen, dass die Box an einem Rahmen montiert ist. Der Rahmen gibt der Box die gewünschte Stabilität, damit sie aus der Normal- in die Reinigungsposition verstellt werden kann, ohne dass dabei übermäßig große Belastungen auf die Box einwirken.

Gemäß einer Ausgestaltung der Erfindung ist vorgesehen, dass die Box in vertikaler Richtung zwischen der Normalposition und der Reinigungsposition verstellbar ist. Bei dieser Ausführungsform wird die Box beispielsweise mittels eines Seilzugs nach oben hochgehoben, so dass Einstreu, Mist etc. aus dem zweiten Bereich geräumt werden kann, ohne dass die Wände der Box im Weg sind. Es sollte allerdings eine Verankerung für die Box vorgesehen sein, mit der diese fixiert wird, wenn sie wieder in die Normalposition abgesenkt wird. Ein solche Verankerung kann beispielsweise aus Schienen oder Bodenverankerungspunkten bestehen.

Gemäß der bevorzugten Ausführungsform ist vorgesehen, dass die Box um ein Gelenk zwischen der Normalposition und der Reinigungsposition schwenkbar ist. Das Gelenk sorgt für die Fixierung der Box sowohl in der Normal- als auch in der Reinigungsposition.

Grundsätzlich könnte die Box auch von Hand aus der Normal- in die Reinigungsposition verstellt werden. Vorzugsweise ist jedoch eine Antriebsvorrichtung vorgesehen, mit der die Box aus der Normalposition in die Reinigungsposition verstellt werden kann. Dies erhöht den Bedienkomfort.

Gemäß einer bevorzugten Ausführungsform ist vorgesehen, dass die Antriebsposition ein Seilzugsystem enthält, mit dem die Box angehoben werden kann, um sie aus der Normal- in die Reinigungsposition zu bringen. Ein Seilzugsystem ist kostengünstig, kann flexibel montiert werden und weist eine lange Lebensdauer auf.

Vorzugsweise greift das Seilzugsystem an zwei voneinander entfernten Punkten an der Box an, so dass diese mittels des Seilzugsystems auch aus der Reinigungsposition in die Normalposition zurückgestellt werden kann.

Weiterhin kann eine Wasserauffangrinne vorgesehen sein, mit der auch Schmutzwasser aufgefangen werden kann, das beim Reinigen der Box anfällt. Das Schmutzwasser kann dadurch in gleicher Weise wie Gülle, die in den Boxen anfällt, geeignet aufgefangen und zu einem Sammelbehälter weitergeleitet werden.

Gemäß einer bevorzugten Ausführungsform ist vorgesehen, dass der erste Bereich sich innerhalb einer Halle und der zweite Bereich außerhalb der Halle befindet. Bei dieser Ausgestaltung werden die Boxen dazu verwendet, die Aufzuchtfläche zu vergrößern, indem sie außerhalb der Halle an diese angebaut werden.

Es kann gemäß einer bevorzugten Ausführungsform vorgesehen sein, dass innerhalb des ersten Bereichs eine Mehrzahl von Kleinboxen für Jungtiere angeordnet ist. Bei den Kleinboxen kann es sich um Kälberiglus zur Einzelhaltung handeln, in denen Jungtiere mit einem Alter von wenigen Tagen bis wenigen Wochen getrennt von älteren Tieren aufgezogen werden.

Die Halle kann mit einer Klimaanlage versehen werden. Es ist auch möglich, die Halle über die natürliche Belüftung der Seitenwandsysteme (Curtains) zu belüften. Hierdurch ist gewährleistet, dass in der Halle zu jeder Zeit die optimalen Aufzuchtbedingungen herrschen. Insbesondere ergeben sich durch die geeignete Belüftung innerhalb der Halle unterschiedliche Klimazonen.

Gemäß einer bevorzugten Ausführungsform ist ein Trenngitter vorgesehen, mit dem der erste vom zweiten Bereich abgetrennt werden kann. Dieses Trenngitter verhindert insbesondere, dass Tiere in den Bereich der Boxen gelangen, wenn diese sich in der Reinigungsposition befinden.

Gemäß einer bevorzugten Ausführungsform ist eine Mehrzahl von Boxen vorgesehen, die nebeneinander angeordnet sind und gleichzeitig aus der Normal- in die Reinigungsposition verstellt werden können. Hierdurch vergrößert sich der Rationalisierungseffekt, da sich ein sehr großer zweiter Bereich ergibt, der, wenn alle Boxen sich in der Reinigungsposition befinden, sehr effizient gereinigt werden kann, indem beispielsweise ein Traktor mit Schaufel durch die "Gasse" zwischen Halle und den sich in der Reinigungsposition befindenden Boxen hindurchfährt und die sich dort befindende Einstreu bzw. den sich dort befindenden Mist wegschiebt.

Die Erfindung wird nachfolgend anhand einer bevorzugten Ausführungsform beschrieben, die in den beigefügten Zeichnungen dargestellt ist. In diesen zeigen:
Figur 1 in einer schematischen perspektivischen Ansicht eine erfindungsgemäße Stallanlage mit Halle und Boxen, die entlang der in der Figur rechten Außenseite der Halle aufgereiht sind und sich in der Normalposition befinden;
Figur 2 die Stallanlage von Figur 1 in einer Seitenansicht;
Figur 3 eine Detail-Seitenansicht entsprechend Figur 2, wobei die Boxen sich in einer Zwischenposition befinden;
Figur 4 eine Ansicht entsprechend Figur 2, wobei sich die Boxen in der Reinigungsposition befinden; und
Figur 5 die Stallanlage in einer perspektivischen Ansicht, wobei sich die Boxen in der Reinigungsposition befinden.

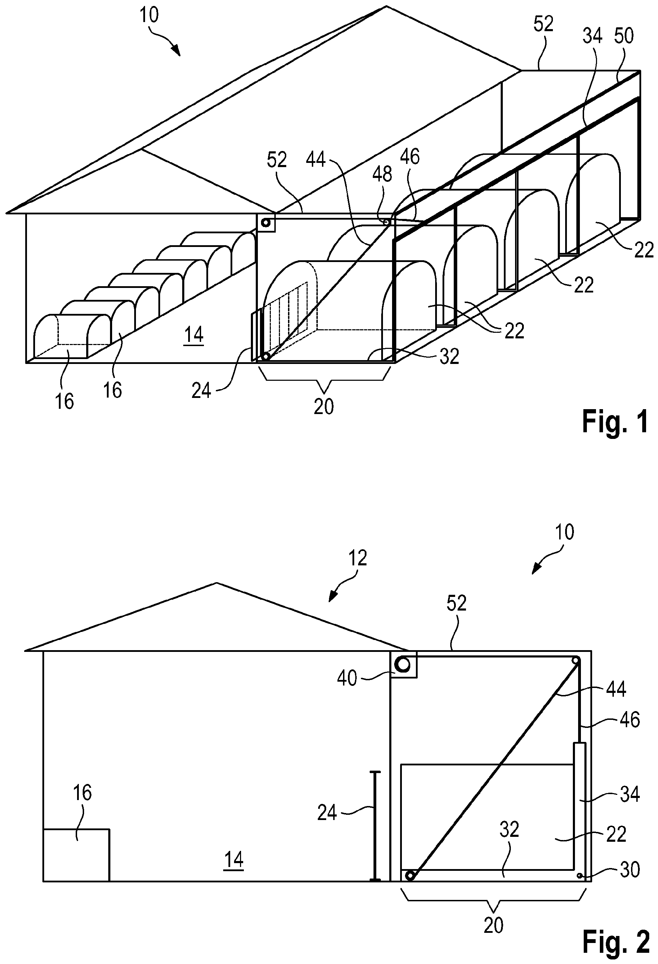

In den Figuren 1 und 2 ist eine Stallanlage 10 zu sehen. Sie dient insbesondere zur Aufzucht von Kälbern. Grundsätzlich kann diese Stallanlage aber auch zur Aufzucht von anderen Tieren verwendet werden.

Die Stallanlage 10 weist eine Halle 12 auf, die als Tragwerkkonstruktion ausgeführt ist, also ähnlich wie ein Zelt mit einer Rahmenkonstruktion und einer Plane, die das Dach und die Seitenwände abdeckt.

Der Bereich innerhalb der Halle 12 stellt einen ersten Bereich 14 dar, in dem aufzuziehende Tiere gehalten werden können. Hierzu sind in grundsätzlich bekannter Weise Trenngitter vorhanden, ist hier nicht dargestellt sind. Die Trenngitter dienen dazu, den ersten Bereich nach Wunsch zu unterteilen.

Im ersten Bereich sind auch mehrere Kleinboxen 16 aufgestellt, in denen sehr junge Tiere (beispielsweise unmittelbar nach der Geburt bis zu einem Alter von wenigen Wochen) gehalten werden können. Bei den Kleinboxen 16 kann es sich insbesondere um Kälberiglus zur Einzelhaltung handeln.

Die Stallanlage 10 umfasst auch einen zweiten Bereich 20, der sich hier seitlich außerhalb der Halle 12 unmittelbar an diese angrenzend befindet. Der zweite Bereich 20 enthält mehrere Boxen 22, durch die er in getrennte Abteile getrennt ist.

Jede Box 22 ist hier ein eigenstabiles Bauteil mit Seitenwänden und einem Dach, wobei die Box 22 an einer Seite offen ist, so dass ein Zugang von der Seite der Halle 12 möglich ist. Bei den Boxen 22 kann es sich insbesondere um Großraumiglus zur Gruppenhaltung handeln.

Hier sind als Beispiel vier Boxen 22 gezeigt. Je nach Größe der Halle können aber auch sehr viel mehr Boxen entlang der Seite der Halle 12 aufgestellt werden.

Zwischen jeder Box 22 und der Halle 12 ist ein Trenngitter 24 vorgesehen, so dass der Zugang von der Halle 12 zu den Boxen 22 bei Bedarf abgesperrt werden kann.

Die Boxen 22 sind bewegbar montiert, so dass sie zwischen einer Normalposition und einer Reinigungsposition verstellt werden können. In der Normalposition (siehe die Figuren 1 und 2) steht jede Box 22 auf dem Untergrund auf, so dass jeweils ein Abteil abgetrennt ist, das sich seitlich außerhalb der Halle 12 befindet.

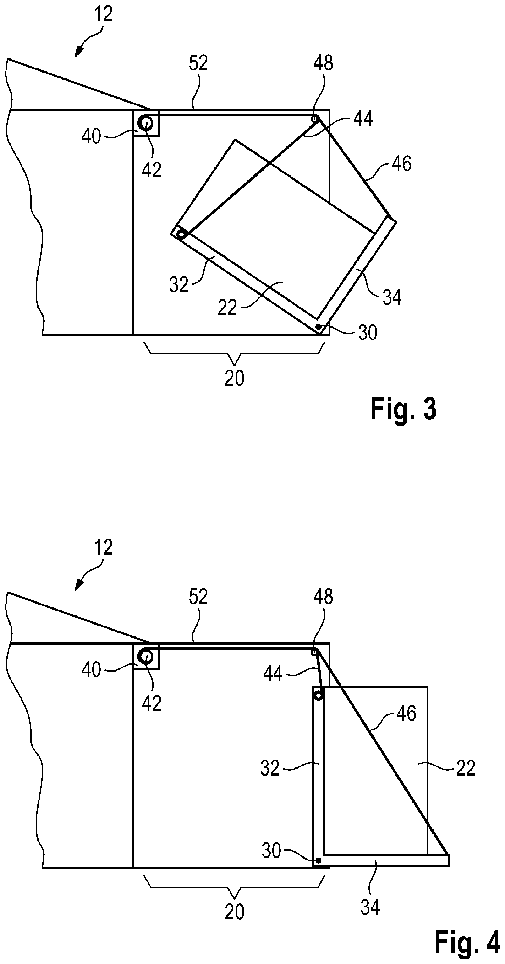

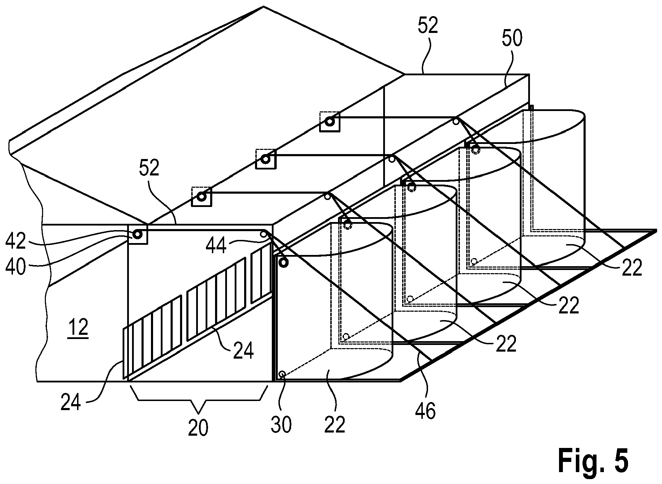

In der Reinigungsposition ist der zweite Bereich 20, in dem sich die Boxen 22 in der Normalposition befinden, völlig freigegeben (siehe die Figuren 4 und 5). "Völlig freigegeben" bedeutet, dass der zweite Bereich 20 für beispielsweise einen Traktor zugänglich ist, der entlang der Außenseite der Halle 12 fahren und dabei mit einer Frontladerschaufel den sich dort befindenden Mist zusammenschieben und zur Rückseite der Halle hin schieben kann. Dadurch ist es möglich, in sehr kurzer Zeit den kompletten zweiten Bereich 20 zu säubern, da keinerlei Trennwände etc. mehr im Weg sind.

Die Boxen 22 werden hier aus der Normal- in die Reinigungsposition verstellt, indem sie um ein Gelenk 30 verschwenkt werden. Das Gelenk ist ein Schwenkgelenk, mit dem die Boxen 22 schwenkbar am Untergrund befestigt sind, und zwar an ihrer von der Halle 12 entfernten Rückseite.

Jede der Boxen 22 ist dabei vorzugsweise an einem Rahmen 32 angebracht, der die entsprechende Box 22 versteift. Das Gelenk 30 ist kann dann gebildet sein durch einen Lagerbolzen, der sich durch Öffnungen im Rahmen 32 und in einer bodenfesten Unterkonstruktion erstreckt, so dass das Schwenklager erhalten ist, um das die Boxen 22 aus der Normal- in die Reinigungsposition verstellt werden können.

Um die Boxen 22 aus der Normal- in die Reinigungsposition zu verstellen, ist ein Antriebsmechanismus vorgesehen, der einen Antriebsmotor 40 enthält, beispielsweise einen Elektromotor. Der Antriebsmotor wirkt auf eine Seilrolle 42, die Teil eines Seilzugsystems ist, das an den Boxen 22 bzw. deren Rahmen 32 angreift.

Grundsätzlich sind verschiedene Arten von Seilzugsystemen möglich, mit denen die Boxen an ihrer der Halle 12 zugewandten Vorderseite angehoben und um das Gelenk 30 an der von der Halle 12 abgewandten Rückseite um rund 90° geschwenkt werden können.

Das Seilzugsystem weist hier ein erstes Seil 44 auf, das als Hebeseil bezeichnet wird, und ein zweites Seil 46, das als Rückstellseil bezeichnet wird.

Das Hebeseil 44 greift an der Box 22 bzw. dem Rahmen 32 der Box an einer Stelle an, die vom Gelenk 30 aus gesehen näher an der Halle 12 liegt. Beim gezeigten Ausführungsbeispiel greift das Hebeseil an der Vorderseite der Box 22 bzw. des Rahmens 32 an, also im maximalen Abstand vom Gelenk 30.

Das Rückstellseil 46 greift an der Box 22 bzw. dem Rahmen 32 an einer Stelle an, die, wenn sich die Box in der Reinigungsposition befindet, auf der vom Gelenk 30 abgewandten Seite der Halle 12 befindet. Beim gezeigten Ausführungsbeispiel greift das Rückstellseil 46 an einem Rahmenschenkel 34 an, der sich an der Rückseite der Box 22 in vertikaler Richtung erstreckt, wenn sie sich in der Normalposition befindet.

Das Hebeseil 44 und das Rückstellseil 46 erstrecken sich ausgehend von der Box 22 bzw. dem Rahmen 32 nach oben hin zu einer Umlenkrolle 48, die etwa vertikal über dem Gelenk 30 an einer Quertraverse 50 angeordnet ist. Von der Umlenkrolle 48 erstrecken sich das Hebe- und das Rückstellseil 44, 46 hin zur Seilrolle 42, die an der Seitenwand der Halle 12 angeordnet ist. Die Seilrolle 42 kann dabei zusammen mit ihrem Antriebsmotor geschützt unter den Dachüberstand der Halle 12 an deren Außenseite montiert sein.

Querkräfte, die aufgrund der Seilführung auf die Quertraverse 50 wirken, werden von einer Stütztraverse 52 direkt zur Halle 12 abgeleitet.

Für das Hebe- und das Rückstellseil 44, 46 kann eine einzige Seilrolle 42 verwendet werden, wenn mit geeigneten geometrischen Verhältnissen und/oder Ausgleichsfedern verhindert ist, dass es zu Verspannungen im Seilzugsystem kommt. Alternativ können auch getrennte Seilrollen verwendet werden, die elastisch gegeneinander verdrehbar auf einer gemeinsamen Antriebswelle angeordnet sind, oder völlig separate Seilrollen.

Wenn die Boxen 22 gereinigt werden sollen, werden zunächst die sich dort befindenden Tiere in die Halle 12 getrieben, und die Trenngitter 24 werden geschlossen, so dass die Tiere nicht mehr in die Boxen 22 zurückkehren können.

Dann wird, um die Boxen 22 aus der Normal- in die Reinigungsposition zu verstellen, der Antriebsmechanismus so aktiviert, dass das Hebeseil 44 aufgewickelt wird. Dadurch wird die der Halle 12 zugewandte Seite der Boxen 22 angehoben (siehe Figur 3), bis die Boxen 22 sich schließlich in der Reinigungsposition befinden (siehe die Figuren 4 und 5), in der die Boxen um rund 90° nach oben geklappt sind. Bei diesem Vorgang wird das Rückstellseil 46 zunächst entsprechend freigegeben. Im zweiten Abschnitt des Rückstellens kommt das Rückstellseil 46 auf Spannung und verhindert, dass die Boxen 22 sich unkontrolliert aufstellen.

Wenn sich die Boxen 22 in der Reinigungsposition befinden, kann der zweite Bereich 20 in einem Durchgang gereinigt werden, beispielweise der sich dort befindende Mist aller Boxen zu einer Seite hin aus der nun freigegebenen "Gasse" ausgeschoben werden.

Weiterhin ist, wenn sich die Boxen 22 in der Reinigungsposition befinden, die Innenseite jeder Box 22 gut zugänglich. So kann die Innenseite der Boxen 22 mit einem Hochdruckreiniger gesäubert werden. Das dabei anfallende Schmutzwasser sammelt sich auf der (im gekippten Zustand untenliegenden) Rückwand der Box 22 und kann in einer Wasserauffangrinne 60 aufgefangen werden, die sich entlang der Gelenke 30 erstreckt.

Um die Boxen 22 zurück in die Normalposition zu verstellen, wird der Antriebsmechanismus so aktiviert, dass das Rückstellseil 46 aufgewickelt wird. Dadurch wird das obere Ende der Rückwand der Box 22 angehoben, bis die Boxen 22 sich schließlich wieder in der Normalposition befinden (siehe die Figuren 1 und 2), in der ihre Seitenwände bzw. die Rahmen auf dem Untergrund aufliegen. Bei diesem Vorgang wird das Hebeseil 44 anfänglich entsprechend freigegeben. Im zweiten Abschnitt des Rückstellens kommt das Hebeseil 44 wieder auf Spannung und verhindert, dass die Boxen 22 unkontrolliert nach unten fallen.

Die beschriebenen Stallanlagen 10 kann zur Komplettaufzucht von Kälbern verwendet werden. Die Halle kann optimal belüftet werden und dabei verschiedene Klimazonen aufweisen, so dass dort jederzeit optimale Temperaturverhältnisse herrschen. Falls gewünscht, kann dazu auch eine Klimaanlage vorgesehen werden.

Ein weiterer Vorteil ist, dass die Stallanlage modular aufgebaut ist. Es kann eine beliebige Anzahl von Boxen entlang der Außenseite der Halle aufgestellt werden, da nicht zwingend die gesamte Außenseite der Halle mit den Boxen erweitert werden muss. Es kann, wenn weitere Boxen aufgestellt werden, auch das Antriebssystem mit geringem Aufwand erweitert werden, indem einfach die Welle, auf der die Seilrollen sitzen, verlängert wird.

## Patentansprüche

1. Stallanlage (10) mit einem ersten Bereich (14) und einem zweiten Bereich (20), in denen sich Tiere aufhalten können, wobei dem zweiten Bereich (20) mindestens eine Box (22) zugeordnet ist, die an mindestens einer Seite offen ist, so dass Tiere in die Box (22) gelangen können, **dadurch gekennzeichnet, dass** die Box (22) verstellbar montiert ist, so dass sie aus einer Normalposition, in der sie den zweiten Bereich (20) abgrenzt, in eine Reinigungsposition gebracht werden kann, in der ein freier Zugang zum zweiten Bereich (20) möglich ist, und wobei die Box (22) eine eigenstabile Kiste mit Seitenwänden und Dach ist.

2. Stallanlage nach Anspruch 1, **dadurch gekennzeichnet, dass** die Box (22) an einem Rahmen (32) montiert ist.

3. Stallanlage nach Anspruch 1 oder 2, **dadurch gekennzeichnet, dass** die Box (22) in vertikaler Richtung zwischen der Normalposition und der Reinigungsposition verstellbar ist.

4. Stallanlage nach Anspruch 1 oder 2, **dadurch gekennzeichnet, dass** die Box (22) um ein Gelenk (30) zwischen der Normalposition und der Reinigungsposition schwenkbar ist.

5. Stallanlage nach einem der vorhergehenden Ansprüche, **dadurch gekennzeichnet, dass** eine Antriebsvorrichtung (40) vorgesehen ist, mit der die Box (22) aus der Normalposition in die Reinigungsposition verstellt werden kann.

6. Stallanlage nach Anspruch 5, **dadurch gekennzeichnet, dass** die Antriebsvorrichtung (40) ein Seilzugsystem enthält, mit dem die Box (22) angehoben werden kann, um sie aus der Normal- in die Reinigungsposition zu bringen.

7. Stallanlage nach Anspruch 6, **dadurch gekennzeichnet, dass** das Seilzugsystem an zwei voneinander entfernten Punkten an der Box angreift, so dass sie mittels des Seilzugsystems auch aus der Reinigungsposition in die Normalposition zurückgestellt werden kann.

8. Stallanlage nach einem der vorhergehenden Ansprüche, **dadurch gekennzeichnet, dass** eine Wasserauffangrinne (60) vorgesehen ist, mit der auch Schmutzwasser aufgefangen werden kann, das beim Reinigen der Box (22) anfällt.

9. Stallanlage nach einem der vorhergehenden Ansprüche, **dadurch gekennzeichnet, dass** sich der erste Bereich (14) innerhalb einer Halle (12) und der zweite Bereich (20) außerhalb der Halle (12) befindet.

10. Stallanlage nach einem der vorhergehenden Ansprüche, **dadurch gekennzeichnet, dass** innerhalb des ersten Bereichs (14) eine Mehrzahl von Kleinboxen (16) für Jungtiere angeordnet ist.

11. Stallanlage nach einem der vorhergehenden Ansprüche, **dadurch gekennzeichnet, dass** unterschiedliche Klimazonen in der Halle (12) vorgesehen sind.

12. Stallanlage nach einem der vorhergehenden Ansprüche, **dadurch gekennzeichnet, dass** dem ersten und dem zweiten Bereich (14, 20) getrennte Fütterungsautomaten zugeordnet sind, die tierspezifische Futtermengen zur Verfügung stellen.

13. Stallanlage nach einem der vorhergehenden Ansprüche, **dadurch gekennzeichnet, dass** ein Trenngitter (24) vorgesehen ist, mit dem der erste vom zweiten Bereich (14, 20) abgetrennt werden kann.

14. Stallanlage nach einem der vorhergehenden Ansprüche, **dadurch gekennzeichnet, dass** eine Mehrzahl von Boxen (22) vorgesehen ist, die nebeneinander angeordnet sind und gleichzeitig aus der Normal- in die Reinigungsposition verstellt werden können.

## Claims

1. A livestock housing facility (10) comprising a first area (14) and a second area (20) in which animals can stay, the second area (20) having at least one box (22) associated therewith which is open on at least one side so that animals can enter the box (22), **characterized in that** the box (22) is mounted to be adjustable, so that it can be brought from a normal position, in which it delimits the second area (20), to a cleaning position, in which free access to the second area (20) is possible, and the box (22) being an inherently stable case having side walls and a roof.

2. The livestock housing facility according to claim 1, **characterized in that** the box (22) is mounted to a frame (32).

3. The livestock housing facility according to claim 1 or 2, **characterized in that** the box (22) is vertically adjustable between the normal position and the cleaning position.

4. The livestock housing facility according to claim 1 or 2, **characterized in that** the box (22) is adapted to be pivoted about a joint (30) between the normal position and the cleaning position.

5. The livestock housing facility according to any of the preceding claims, **characterized in that** a drive device (40) is provided by means of which the box (22) can be adjusted from the normal position to the cleaning position.

6. The livestock housing facility according to claim 5, **characterized in that** the drive device (40) contains a rope pulley system by means of which the box (22) can be lifted to bring it from the normal position to the cleaning position.

7. The livestock housing facility according to claim 6, **characterized in that** the rope pulley system engages two points of the box that are remote from each other, so that the box can also be returned from the cleaning position to the normal position by means of the rope pulley system.

8. The livestock housing facility according to any of the preceding claims, **characterized in that** a water collection gutter (60) is provided, by means of which dirty water that accumulates when the box (22) is cleaned can also be collected.

9. The livestock housing facility according to any of the preceding claims, **characterized in that** the first area (14) is located within a hall (12) and the second area (20) is located outside the hall (12).

10. The livestock housing facility according to any of the preceding claims, **characterized in that** a plurality of small boxes (16) for young animals is arranged within the first area (14).

11. The livestock housing facility according to any of the preceding claims, **characterized in that** different climate zones are provided in the hall (12).

12. The livestock housing facility according to any of the preceding claims, **characterized in that** the first and second areas (14, 20) have separate automatic feeders associated therewith, which provide animal-specific quantities of feed.

13. The livestock housing facility according to any of the preceding claims, **characterized in that** a separating grid (24) is provided, by means of which the first and second areas (14, 20) can be separated from each other.

14. The livestock housing facility according to any of the preceding claims, **characterized in that** a plurality of boxes (22) is provided which are arranged side by side and can be adjusted from the normal position to the cleaning position simultaneously.

## Revendications

1. Installation d'étable (10) comportant une première zone (14) et une deuxième zone (20) dans lesquelles les animaux peuvent rester, au moins un box (22) étant associé à la deuxième zone (20) lequel est ouvert sur au moins un côté de sorte que des animaux peuvent parvenir dans le box (22), **caractérisée en ce que** le box (22) est monté ajustable de manière à pouvoir être amené d'une position normale dans laquelle il délimite la deuxième zone (20) dans une position de nettoyage dans laquelle un accès libre à la deuxième zone (20) est possible, et le box (22) étant une boîte à stabilité propre présentant des parois latérales et un toit.

2. Installation d'étable selon la revendication 1, **caractérisée en ce que** le box (22) est monté sur un cadre (32).

3. Installation d'étable selon la revendication 1 ou 2, **caractérisée en ce que** le box (22) est ajustable dans le sens vertical entre la position normale et la position de nettoyage.

4. Installation d'étable selon la revendication 1 ou 2, **caractérisée en ce que** le box (22) est apte à pivoter autour d'une articulation (30) entre la position normale et la position de nettoyage.

5. Installation d'étable selon l'une des revendications précédentes, **caractérisée en ce qu'**il est prévu un dispositif d'entraînement (40) au moyen duquel le box (22) peut être ajusté de la position normale à la position de nettoyage.

6. Installation d'étable selon la revendication 5, **caractérisée en ce que** le dispositif d'entraînement (40) comprend un système de traction par câble au moyen duquel le box (22) peut être soulevé pour l'amener de la position normale dans la position de nettoyage.

7. Installation d'étable selon la revendication 6, **caractérisée en ce que** le système de traction par câble s'engage sur deux points espacés l'un de l'autre sur le box de telle sorte qu'il est également possible de le remettre de la position de nettoyage dans la position normale au moyen du système de traction par câble.

8. Installation d'étable selon l'une des revendications précédentes, **caractérisée en ce qu'**il est prévu un conduit collecteur d'eau (60) au moyen duquel il est également possible de collecter de l'eau sale produite lors du nettoyage du box (22).

9. Installation d'étable selon l'une des revendications précédentes, **caractérisée en ce que** la première zone (14) se trouve à l'intérieur d'une salle (12) et la deuxième zone (20) se trouve à l'extérieur de la salle (12).

10. Installation d'étable selon l'une des revendications précédentes, **caractérisée en ce qu'**une pluralité de petits boxes (16) pour de jeunes bêtes est agencée à l'intérieur de la première zone (14).

11. Installation d'étable selon l'une des revendications précédentes, **caractérisée en ce que** différentes zones climatiques sont prévues dans la salle (12).

12. Installation d'étable selon l'une des revendications précédentes, **caractérisée en ce que** des distributeurs d'alimentation automatiques séparés fournissant des quantités de fourrage spécifiques aux animaux sont associés à la première et à la deuxième zone (14, 20).

13. Installation d'étable selon l'une des revendications précédentes, **caractérisée en ce qu'**il est prévu une grille de séparation (24) au moyen de laquelle la première zone peut être séparée de la deuxième zone (14, 20).

14. Installation d'étable selon l'une des revendications précédentes, **caractérisée en ce qu'**il est prévu une pluralité de boxes (22) qui sont agencés les uns à côté des autres et qui sont aptes à être simultanément ajustés de la position normale vers la position de nettoyage.
